# EUROPÄISCHE PATENTSCHRIFT

(11) **EP 0 618 095 B1**
(45) Veröffentlichungstag und Bekanntmachung des Hinweises auf die Patenterteilung: **06.03.1996**
(21) Anmeldenummer: 94105107.0
(22) Anmeldetag: 31.03.1994
(51) Int. Cl.: B60G 7/00, B60G 11/113

(54) **Vorrichtung zum Verbinden von Längslenkereinheiten mit einer Radachse von Nutzfahrzeugen**
Device for mounting an axle on longitudinal arms for industrial vehicles
Dispositif pour fixer un essieu sur des bras longitutinaux pour véhicules utilitaires

(30) Priorität: 02.04.1993 DE 9305039 U
(43) Veröffentlichungstag der Anmeldung: 05.10.1994
(73) Patentinhaber: Trenkamp & Gehle GmbH, D-49413 Dinklage (DE)
(72) Erfinder: Gehle,Konrad, D-49408 Dinklage (DE)
(74) Vertreter: Busse & Busse Patentanwälte

(56) Entgegenhaltungen:
- EP-A- 0 240 649
- FR-A- 2 088 906
- GB-A- 2 126 539
- US-A- 1 377 430
- US-A- 1 435 052
- US-A- 1 580 565
- US-A- 3 970 166

## Beschreibung

Die Erfindung betrifft eine Vorrichtung zum Verbinden von Längslenkereinheiten mit einer Radachse von Nutzfahrzeugen, insbesondere Starrachsen gezogener oder aufgesattelter Lkw-Anhänger, nach dem Oberbegriff des Anspruchs 1.

Bei bekannten Vorrichtungen zum Verbinden von Längslenkereinheiten mit Radachsen sind an dieser die Lenkerteile über eine angeschweißte Führungsplatte abgestützt, so daß der Herstellungs- und Montageaufwand einer derartigen Einbindung nachteilig erhöht ist.

Eine Verbindungsvorrichtung gemäß dem Oberbegriff des Anspruches 1 ist aus US-A-3.970.166 bekannt. Bei dieser ist die Auflageplatte in die Außenflächenbereiche der Radachse übergreifenden Randbereichen als ein U-förmiger Klemmkörper ausgebildet, der in üblicher Weise ohne Umformung an der Radachse festgelegt ist.

Der Erfindung liegt die Aufgabe zugrunde, eine Vorrichtung der eingangs genannten Art zu schaffen, die mit vermindertem Herstellungsaufwand eine stabile Abstützung der Lenkerteile ermöglicht.

Die Erfindung löst diese Aufgabe durch eine Vorrichtung zum Verbinden von Längslenkereinheiten mit den Merkmalen des Anspruchs 1. Hinsichtlich wesentlicher weiterer Ausgestaltungen wird auf die Ansprüche 2 bis 21 verwiesen.

Nach der Erfindung weist der Klemmkörper ein die Auflageplatte und die Klemmbacken umfassendes Bauteil zwischen der Radachse und der Lenkereinheit auf, das so auf der Radachse in Verbindungseingriff positionierbar ist, daß die erzeugten Spannkräfte eine kraftschlüssige Einbindung bewirken und gleichzeitig über einen Formschluß eine zusätzliche, die Stabilität und dynamische Belastbarkeit der Einbindung verbessernde Verspannung zwischen den einzelnen Bauteilen erreicht wird.

Der Klemmkörper kann mit vermindertem Montageaufwand auf den jeweiligen Bereich der Radachse in einer Vormontagestellung positioniert und danach in die Einbaulage verspannt werden, wobei unter Ausnutzung der elastischen und/oder plastischen Umformung der Teile des Klemmkörpers die federelastischen Rückstellkräfte innerhalb des Klemmkörpers die Stabilität der Einbindung der Radachse und einer oder zweier Längslenkereinheiten, die eine beliebige geeignete Ausführung aufweisen können, in der Einbaulage mit hoher Zuverlässigkeit gewährleisten.

Hinsichtlich wesentlicher weiterer Vorteile und Einzelheiten der Erfindung wird auf die nachfolgende Beschreibung und die Zeichnung verwiesen, in der ein Ausführungsbeispiel des Gegenstandes der Erfindung näher veranschaulicht ist. In der Zeichnung zeigen:
- Fig. 1: eine teilweise geschnittene Vorderansicht auf eine erfindungsgemäße Vorrichtung in Richtung einer Radachse,
- Fig. 2: eine teilweise geschnittene Seitenansicht der Vorrichtung gemäß Fig. 1,
- Fig. 3: eine Vorderansicht ähnlich Fig. 1 mit einem erfindungsgemäßen Klemmkörper in einer Vormontagestellung,
- Fig. 4: eine vergrößerte Einzeldarstellung des erfindungsgemäßen Klemmkörpers in einer Ansicht entsprechend Fig. 3,
- Fig. 5: eine Vorderansicht einer Klemmbacke des Klemmkörpers,
- Fig. 6: eine Draufsicht auf die Klemmbacke gemäß Fig. 5 und
- Fig. 7: eine teilweise geschnittene Seitenansicht des Klemmkörpers gemäß der Linie VII-VII in Fig. 6.

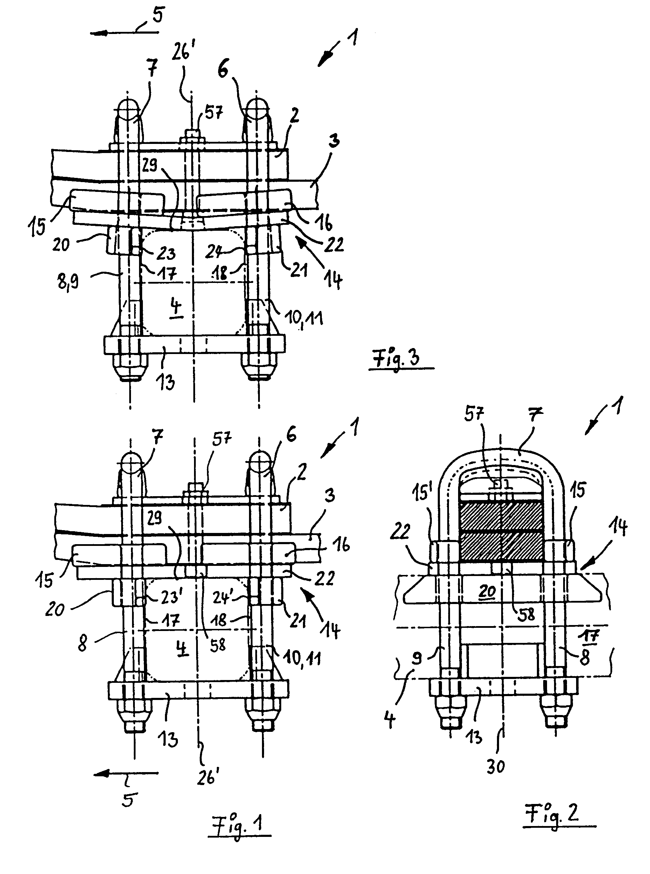

In Fig. 1 ist in einer Prinzipdarstellung eine zum Verbinden von Längslenkereinheiten vorgesehene, insgesamt mit 1 bezeichnete Vorrichtung dargestellt, die an Starrachsen gezogener oder aufgesattelter Lkw-Anhänger, an Lkw-Achsen und an Lenkachsen von Nutzfahrzeugen angeordnet sein kann.

Mit der Vorrichtung 1 sind jeweilige als Stützteile einer Luftfeder (nicht dargestellt) bzw. als Radialverstrebung vorgesehene Lenkerteile 2,3 oberhalb einer Radachse 4 positioniert und über jeweils quer zur Fahrtrichtung (veranschaulicht mit einem Pfeil 5) angeordnete Federbügel 6,7 miteinander verspannt. Ebenso ist denkbar, die Lenkerteile 2,3 unterhalb der Radachse 4 zu positionieren und die Spannrichtung der Federbügel 6,7 umzukehren. In jedem Fall sind dabei jeweilige Spannschenkel 8,9 bzw. 10,11 mit einer an der Radachse 4 anliegenden Gegenplatte 13 verbunden und zwischen der Radachse 4 und dem unteren Lenkerteil 3 ein die Einbaulage der Bauteile bestimmender Klemmkörper 14 vorgesehen.

Mit dem Klemmkörper 14 ist eine vorteilhafte Einbindung der Bauteile geschaffen, wobei sowohl eine Abstützung der Lenkerteile 2,3 im Bereich jeweiliger Führungsstücke 15,16 als auch ein kraft- und formschlüssiger Verbindungseingriff des Klemmkörpers 14 im Bereich in Fahrtrichtung 5 einander gegenüberliegender Außenflächenbereiche 17,18 der Radachse 4 erreichbar ist.

Dazu ist der Klemmkörper 14 mit zwei als vorspannbare Druckteile ausgebildeten Klemmbacken 20,21 versehen (Fig. 2), die jeweils randseitig an einem Auflageplattenteil 22 des Klemmkörpers 14 angeordnet sind.

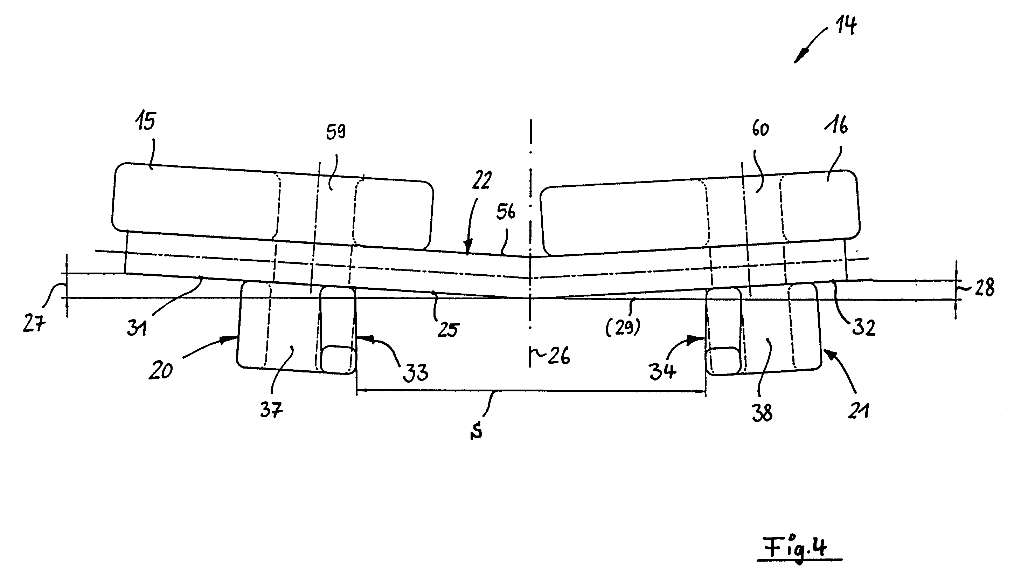

In Fig. 3 ist der Klemmkörper 14 in einer von den beiden U-förmigen Federbügeln 6,7 übergriffenen Vormontagestellung veranschaulicht, aus der die Bauteile über eine Umformung des zwischen den Klemmbacken 20,21 befindlichen Bereichs des Auflageplattenteils 22 in die Einbaulage (Fig. 1) verbracht werden. Der Auflageplattenteil 22 kann dabei teilweise im Elastizitätsbereich des Werkstoffes, teilweise aber auch unter Überschreiten der Streckgrenze so verspannt werden, daß eine besonders formstabile Einbindung der Bauteile geschaffen ist.

Die Zusammenschau der in Fig. 3 und Fig. 1 dargestellten Montagephasen der Vorrichtung 1 macht deutlich, daß die jeweils an den Außenflächenbereichen 17,18 der Radachse 4 anliegenden Klemmbacken 20,21 in der Vormontagestellung linienförmige Anlagebereiche 23,24 darbieten und in der Einbaulage jeweils ein durchgehend flächiger Anlagebereich 23',24' gebildet ist.

Der in Fig. 4 in vergrößerter Einzeldarstellung veranschaulichte Klemmkörper 14 ist in zweckmäßiger Ausführungsform dadurch gebildet, daß die beiden Klemmbacken 20,21 mit dem Auflageplattenteil 22 verschweißt sind. Ebenso ist denkbar, den Klemmkörper 14 als einstückiges Bauteil, beispielsweise in Form eines Stahlguß- oder Schmiedeteils auszubilden, so daß die statische und dynamische Belastbarkeit des Klemmkörpers 14 in der Einbaulage erhöht ist.

Die Einzeldarstellung gemäß Fig. 4 verdeutlicht, daß der Klemmkörper 14 im Bereich seiner sich zwischen den beiden Klemmbacken 20,21 erstreckenden Unterseite 25 des Auflageplattenteils 22 jeweils beidseits einer vertikalen Quermittelebene 26 (die in der Einbaulage der Achsmittelebene 26' entspricht) eine spitzwinklige Neigung 27,28 aufweist, die in der Einbaulage zu einer Anlagefläche 29 der Radachse 4 (Fig. 1, Fig. 3) hin gebildet ist, die im Bereich einer Spannweite S zwischen die beiden Klemmbacken 20,21 hineinragt.

Damit ist der Klemmkörper 14 im Bereich des Auflageplattenteils 22 bzw. an jeweiligen geneigten Unterseitenbereichen 31,32 mit einer Spannkontur versehen, die mit sich im wesentlichen parallel zur Achsmittelebene 26 bzw. 26' erstreckenden Druckeinleitungsflächen 33,34 der Klemmbacken 20,21 sowohl in der Vormontagestellung (Fig. 1) als auch in der Einbaulage der Vorrichtung 1 (Fig. 3) zusammenwirkt, so daß die von den Federbügeln 6,7 bzw. deren jeweiligen Spannschenkeln 8,9 bzw. 10,11 im Bereich jeweiliger Durchgriffsöffnungen 37,38 durchgriffenen Klemmbacken 20,21 an den Außenflächen 23,24 der Radachse 4 eine formschlüssige Verbindung bilden, der über das Spannmoment der Schraubenverbindung zur Gegenplatte 13 ein definierter Kraftschluß überlagert werden kann.

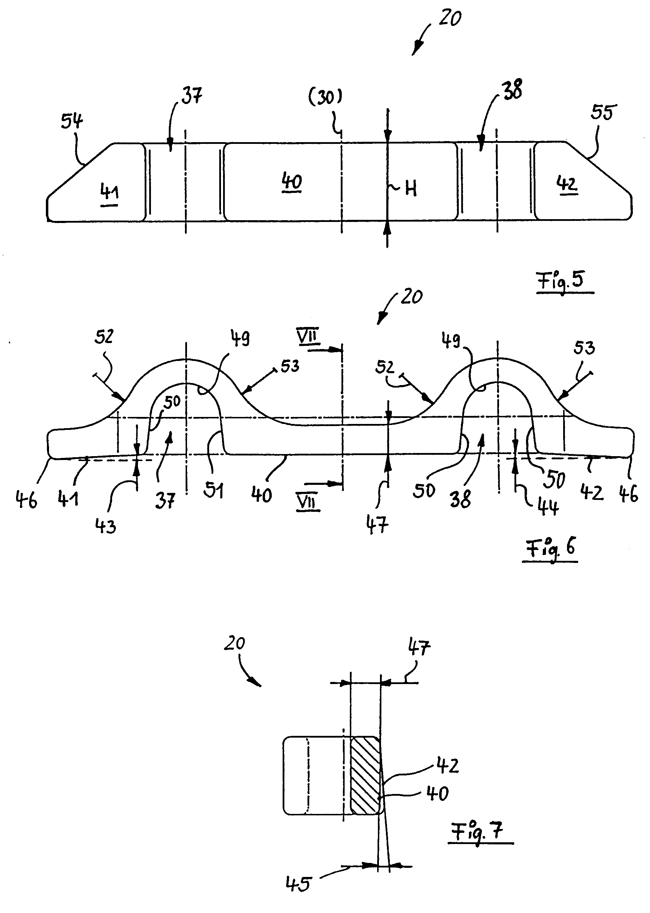

In Fig. 5 bis 7 ist die Klemmbacke 20 in einer Einzeldarstellung veranschaulicht, so daß ein zwischen den Durchgriffsöffnungen 37,38 befindlicher und gegenüber jeweiligen äußeren Anlageflächen 41,42 zurückgesetzter mittlerer Anlagebereich 40 deutlich wird (Fig. 6). Dabei sind die beiden äußeren Anlageflächen 41,42 in vorteilhafter Ausbildung jeweils mit einer zu den Durchgangsöffnungen 37,38 hin geneigten Schrägung 43,44 versehen, mit der in der Vormontagestellung (Fig. 3) des Klemmkörpers 14 im Bereich der beiden Klemmbacken 20,31 die linienförmigen Anlagebereiche 23,24 an den Außenflächenbereichen 17,18 der Radachse 4 gebildet sind, da die Anlageflächen 41,42 der Klemmbacken 20,21 in dieser noch weitgehend entspannten Stellung nur im jeweiligen Endbereich an der Radachse 4 anliegen.

Die geschnittene Darstellung gemäß Fig. 7 verdeutlicht die Querschnittskontur der Klemmbacke 20, wobei diese im Bereich der äußeren Anlagefläche 41,42 jeweils eine bei der Verspannung der Einzelteile (Fig. 3) mit den Winkeln 27,28 im Bereich des Auflageplattenteils 22 zusammenwirkende Neigung 45 aufweisen können, mit der eine zusätzliche Klemmkraftverstärkung in der Einbaulage (Fig. 1) erreicht werden kann.

In zweckmäßiger Ausführungsform gehen die Anlageflächen 41,42 randseitig in einen Formradius 46 über, so daß der aus der Vormontagestellung in die entsprechende Einbaulage überführbare Klemmkörper 14 bei der Montage ohne Kerbwirkungen auf den jeweiligen Außenflächenbereichen 17,18 und mit geringem Reibwiderstand in den Verbindungseingriff mit der Radachse 4 gepreßt werden kann.

Die Klemmbacken 20,21 sind in zweckmäßiger Ausführungsform jeweils als im wesentlichen gleichmäßige Wanddickenbereiche 47 darbietende Formteile mit einer konstanten Bauteilhöhe H ausgebildet (Fig. 6), wobei die die jeweiligen Spannschenkel 35,36 der Federbügel 6,7 aufnehmenden Durchgangsöffnungen 37,38 in nutförmiger Ausbildung sich über die gesamte Bauteilhöhe H erstrecken. Diese Nutöffnungen 37,38 weisen dabei jeweils einen bogenförmig ausgebildeten Bodenwandbereich 49 auf, der in nach außen gespreizte Wandbereiche 50,51 übergeht.

Im Bereich der von den Anlageflächen 40,41,42 abgewandten, in der Einbaulage der Klemmbacken 20,21 nach außen gerichteten Außenseite weisen die Klemmbacken 20,21 gleichmäßig ineinander übergehende Radienkonturen 52,53 auf, mit denen eine kerbwirkungsfreie Ausbildung der spannkraftbeaufschlagten Klemmbacken 20,21 erreicht und damit deren hohe dynamische Belastbarkeit gewährleistet ist.

Die Darstellung gemäß Fig. 5 verdeutlicht, daß die Klemmbacke 20 jeweils endseitig im Bereich der Anlageflächen 41,42 von der Bauteilhöhe H zum Randbereich hin verlaufende Formschrägen 54,55 aufweist, die in der Vormontagestellung der Klemmbacken 20,21 einen für die klemmende Positionierung der Bauteile hinreichenden Kontaktbereich bilden, der bei der weiteren Verspannung der Einzelteile bis in die Einbaulage gemäß Fig. 1 die gesamte Anlagefläche 41 bzw. 42 umfaßt.

Der in Fig. 4 dargestellte Klemmkörper 14 verdeutlicht, daß auf der den Klemmbacken 20,21 gegenüberliegenden Anlagefläche 56 für die Lenkerteile 2,3 (Fig. 1) jeweils die von den Federbügeln 6,7 im Bereich jeweiliger Durchgangsöffnungen 59,60 durchgriffenen Führungsstücke 15,16 vorgesehen sind, die einstückig mit dem Auflageplattenteil 22 verbunden sein können, so daß der Klemmkörper 14 insgesamt ein kompaktes, sowohl eine schnelle Montage der Einbindungsteile als auch eine stabile Abstützung der Lenkerteile 2,3 ermöglichendes Bauteil bildet.

Im Bereich des Auflageplattenteils 22 ist der Klemmkörper 14 mit einer einen Herzbolzen 57 der Lenkeranbindung aufnehmenden Bohrung 58 (Fig. 1) versehen, in die ein an der Radachse 4 im Bereich der Anlagefläche 29 vorgesehenes und eine Montagehilfe bildendes Markierungsteil (nicht dargestellt) eingreifen kann.

Der vorbeschriebene Klemmkörper 14 kann über eine entsprechende Ausbildung der Klemmbacken 20,21 im Bereich der Anlageflächen 40,41,42 an unterschiedliche Querschnitte der Radachse 4 angepaßt werden, so daß auch bei veränderter Kontur der jeweiligen Außenflächenbereiche 23,24 der Radachse 4 eine stabile Einbindung der Längslenkereinheiten mit der Vorrichtung 1 erreichbar ist.

## Patentansprüche

1. Verbindungsvorrichtung für Längslenkereinheiten mit einer Radachse von Nutzfahrzeugen, insbesondere Starrachsen gezogener oder aufgesattelter Lkw-Anhänger, bestehend aus einer zumindest einen Lenkerteil (2, 3) im jeweiligen Endbereich der Radachse (4) an dieser festlegenden Halteeinrichtung mit einer dessen Einbaulage vorgebenden Auflageplatte (22), wobei die Auflageplatte (22) als ein zwei in Fahrtrichtung (5) einander gegenüberliegende Außenflächenbereiche (17, 18) der Radachse (4) mit je einer Klemmbacke (20, 21) aufnehmender und an dieser in einem kraft- und formschlüssigen Verbindungseingriff gehaltener Klemmkörper (14) ausgebildet ist, **dadurch gekennzeichnet**, daß die Auflageplatte (22) in einer Vormontagestellung beidseits einer vertikalen Quermittelebene (26) an ihrer Unterseite (25) eine spitzwinklige Neigung (27, 28) aufweist und über eine Umformung ihres zwischen den Klemmbacken (20, 21) befindlichen Teils in der an einer Anlagefläche (29) der Radachse (4) anliegenden Einbaulage festgelegt ist.

2. Vorrichtung nach Anspruch 1, dadurch gekennzeichnet, daß der Klemmkörper (14) in seiner Vormontagestellung von zwei U-förmigen Federbügeln (6, 7) übergriffen ist und diese in der Einbaulage verspannt sind.

3. Vorrichtung nach Anspruch 1 oder 2, dadurch gekennzeichnet, daß jeweils an den Außenflächenbereichen (17, 18) der Radachse (4) anliegenden Klemmbacken (20, 21) in der Vormontagestellung linienförmige Anlagebereiche (23, 24) und in der Einbaulage einen durchgehenden flächigen Anlagebereich (23', 24') aufweisen.

4. Vorrichtung nach einem der Ansprüche 1 bis 3, dadurch gekennzeichnet, daß die beiden Klemmbacken (20, 21) jeweils mit dem Auflageplattenteil (22) verschweißt sind..

5. Vorrichtung nach einem der Ansprüche 1 bis 3, dadurch gekennzeichnet, daß der Klemmkörper (14) als ein einstückiges Bauteil ausgebildet ist.

6. Vorrichtung nach Anspruche 5, dadurch gekennzeichnet, daß der Klemmkörper (14) als ein Stahlgußteil ausgebildet ist.

7. Vorrichtung nach Anspruch 5, dadurch gekennzeichnet, daß der Klemmkörper (14) als ein Schmiedeteil ausgebildet ist.

8. Vorrichtung nach einem der Ansprüche 1 bis 7, dadurch gekennzeichnet, daß die an den jeweiligen geneigten Unterseitenbereichen (31, 32) des Auflageplattenteils (22) befindlichen Klemmbacken (20, 21) in der Vormontagestellung eine zu den Außenflächenbereichen (17, 18) der Radachse (4) zumindest bereichsweise konvexe Druckeinleitungsfläche (33, 34) darbieten.

9. Vorrichtung nach einem der Ansprüche 1 bis 8, dadurch gekennzeichnet, daß die Klemmbacken (20, 21) jeweils als in der Einbaulage koaxial zur Mittelebene (30) der Lenkerteile (2, 3) angeordnete und symmetrische Durchgriffsöffnungen (37, 38) für die Federbügel (6, 7) aufweisende Teile ausgebildet sind.

10. Vorrichtung nach Anspruch 9, dadurch gekennzeichnet, daß die Klemmbacke (20, 21) jeweils zwischen den Durchgriffsöffnungen (37, 38) einen mittleren Anlagebereich (40) aufweist, der gegenüber jeweiligen äußeren Anlageflächen (41, 42) zurückgesetzt ist.

11. Vorrichtung nach Anspruch 9 oder 10, dadurch gekennzeichnet, daß die äußeren Anlageflächen (41, 42) jeweils eine zu den Durchgangsöffnungen (37, 38) hin geneigte Schrägung (43, 44) aufweisen.

12. Vorrichtung nach Anspruch 11, dadurch gekennzeichnet, daß über die jeweilige Schrägung (43, 44) der Anlageflächen (41, 42) in der Vormontagestellung der Klemmbacken (20, 21) die linienförmigen Anlagebereiche (23, 24) gebildet sind.

13. Vorrichtung nach einem der Ansprüche 10 bis 12, dadurch gekennzeichnet, daß die äußeren Anlageflächen (41, 42) in der Vormontagestellung eine den Winkeln (27, 28) im Bereich des Auflageplattenteils (22) entsprechende Neigung (45) aufweisen.

14. Vorrichtung nach einem der Ansprüche 10 bis 13, dadurch gekennzeichnet, daß die äußeren Anlageflächen (41, 42) randseitig in einen Formradius (46) übergehen.

15. Vorrichtung nach einem der Ansprüche 1 bis 14, dadurch gekennzeichnet, daß die Klemmbacken (20, 21) jeweils als ein im wesentlichen gleichmäßige Wanddickenbereiche (47) darbietendes Formteil mit einer konstanten Bauteilhöhe (H) ausgebildet sind.

16. Vorrichtung nach einem der Ansprüche 1 bis 15, dadurch gekennzeichnet, daß die Klemmbacken (20, 21) mit sich über die Bauteilhöhe (H) erstreckenden nutförmigen Durchgangsöffnungen (37, 38) für jeweilige Spannschenkel (9, 9; 10, 11) der Federbügel (6, 7) versehen sind.

17. Vorrichtung nach Anspruch 16, dadurch gekennzeichnet, daß die Nutöffnungen (37, 38) jeweils einen bogenförmig ausgebildeten Bodenwandbereich (49) aufweisen, der in nach außen gespreizte Wandbereiche (50, 51) übergeht.

18. Vorrichtung nach einem der Ansprüche 15 bis 17, dadurch gekennzeichnet, daß die in der Einbaulage der Klemmbacken (20, 21) nach außen gerichteten Formteilbereiche gleichmäßig ineinander übergehende Radienkonturen (52, 53) aufweisen.

19. Vorrichtung nach einem der Ansprüche 10 bis 18, dadurch gekennzeichnet, daß die Klemmbacke (20, 21) jeweils endseitig im Bereich der Anlageflächen (41, 42) eine von der Bauteilhöhe (H) zum Endbereich hin verlaufende Formschräge (54, 55) aufweist.

20. Vorrichtung nach einem der Ansprüche 1 bis 19, dadurch gekennzeichnet, daß der Klemmkörper (14) auf einer den Klemmbacken (20, 21) gegenüberliegenden Anlagefläche (56) für den Lenkerteil (3) jeweils mit von den Federbügeln (6, 7) durchgriffenen Führungsstücken (15, 16) versehen ist.

21. Vorrichtung nach einem der Ansprüche 1 bis 20, dadurch gekennzeichnet, daß der Klemmkörper (14) im Bereich des Auflageplattenteils (22) mit einer einen Herzbolzen (57) der Lenkerteilanbindung aufnehmenden Bohrung (58) versehen ist.

## Claims

1. A device for connecting longitudinal guide rod units to a wheel axle of commercial vehicles, particularly rigid axles of towed or semi-mounted lorry trailers, consisting of a holding means for fixing on the wheel axle (4) at least one guide part (2, 3) in the respective end zone of said axle, with a bearing plate (22) which predetermines the installation position of the holding means, the bearing plate (22) being constructed as a clamping member (14), its respective clamping jaws (20, 21) accommodating two portions (17, 18) of the outer surface of the wheel axle (4) which are situated opposite each other in the direction of travel (5), said clamping member (14) being held on the wheel axle (4) in a positive and operative connecting engagement, characterised in that, in a pre-assembly position, the bearing plate (22) has on both sides of a vertical transverse median plane (26), an acutely angled inclination (27, 28) on its underside (25), being fixed in the installed position in which it rests on a supporting surface (29) on the wheel axle (4) via a change in shape of its part which is disposed between the clamping jaws (20, 21).

2. A device according to claim 1, characterised in that in its pre-assembly position, the clamping member (14) has two U-shaped spring brackets (6, 7) engaging over it and in that they are braced in the installation position.

3. A device according to claim 1 or 2, characterised in that clamping jaws (20, 21) resting on respective external surface portions (17, 18) of the wheel axle (4), when in the pre-assembly position, have linear bearing zones (23, 24) while in the installed position they have a continuous and flat bearing area (23', 24').

4. A device according to one of claims 1 to 3, characterised in that the two clamping jaws (20, 21) are each welded to the bearing plate part (22).

5. A device according to one of claims 1 to 3, characterised in that the clamping member (14) is constructed as a one-piece component.

6. A device according to claim 5, characterised in that the clamping member (14) is constructed as a steel casting.

7. A device according to claim 5, characterised in that the clamping member (14) is constructed as a forged part.

8. A device according to one of claims 1 to 7, characterised in that in the pre-assembly position, the clamping jaws (20, 21) disposed on the respective inclined underside portions (31, 32) of the bearing plate part (22) offer a pressure initiating surface (33, 34) at least areas of which are convex to the external surface portions (17, 18) of the wheel axle (4).

9. A device according to one of claims 1 to 8, characterised in that the clamping jaws (20, 21) are in each case constructed as parts which, in the installed position, are disposed coaxially in respect of the median plane (30) through the guide rod parts (2, 3) and have symmetrical apertures (37, 38) to provide access to the spring brackets (6, 7).

10. A device according to claim 9, characterised in that the clamping jaw (20, 21) has in each case between the access apertures ( 37, 38) a central bearing zone (40) which is set back from respective outer bearing surfaces (41, 42).

11. A device according to claim 9 or 10, characterised in that the external bearing surfaces (41, 42) in each case have a chamfer (43, 44) inclined in the direction of the access apertures (37, 38).

12. A device according to claim 11, characterised in that in the pre-assembly position of the clamping jaws (20, 21) the linear bearing zones (23, 24) are formed over the respective chamfer (43, 44) on the bearing surfaces (41, 42).

13. A device according to one of claims 10 to 12, characterised in that the external bearing surfaces (41, 42) have, in the pre-assembly position, an angle of inclination (45) which corresponds to the angles (27, 28) in the region of the bearing plate part (22).

14. A device according to one of claims 10 to 13, characterised in that the edges of the external bearing surfaces (41, 42) merge into a shaped radius (46).

15. A device according to one of claims 1 to 14, characterised in that the clamping jaws (20, 21) are in each case constructed as a shaped member with a constant component height (H) and offering substantially uniform wall thickness portions (47).

16. A device according to one of claims 1 to 15, characterised in that the clamping jaws (20, 21) are provided with, extending over the component height (H), slot-like apertures (37, 38) for respective clamping arms (9, 9; 10, 11) on the spring brackets (6, 7).

17. A device according to claim 16, characterised in that the slot-like apertures (37, 38) each have an arcuately constructed portion (49) of end wall which merges into outwardly opened-out wall portions (50, 51).

18. A device according to one of claims 15 to 17, characterised in that the shaped part portions which are directed outwardly in the installed position of the clamping jaws (20, 21) have uniformly inter-merging radius contours (52, 53).

19. A device according to one of claims 10 to 18, characterised in that the clamping jaw (20, 21) has in each case at the end, in the region of the bearing surfaces (41, 42), an inclined shape (54, 55) extending from the component height (H) to the end portion.

20. A device according to one of claims 1 to 19, characterised in that the clamping member (14) has on a bearing surface (56) opposite the clamping jaws (20, 21) and provided for the guide rod part (3), guide members (15, 16) through which the spring brackets (6, 7) pass.

21. A device according to one of claims 1 to 20, characterised in that the clamping member (14) has in the region of the bearing plate part (22) a bore (58) which accommodates a core bolt (57) of the guide rod part mounting.

## Revendications

1. Dispositif pour fixer un essieu sur des unités de bras oscillants longitudinaux de véhicules utilitaires, notamment des essieux rigides de remorques de camion tirées ou des semi-remorques, constitué d'un dispositif de retenue, fixant, dans chaque région d'extrémité de l'essieu (4), sur celui-ci, au moins un élément de bras (2, 3), avec une plaque de support (22) définissant la position de montage, étant entendu que la plaque de support (22) est conçue comme un corps de serrage (14) recevant deux régions superficielles extérieures (17, 18) de l'essieu (4) opposées l'une à l'autre dans la direction d'avancement (5), chacune par une mâchoire de serrage (20, 21) et maintenu en prise de fixation avec l'essieu par transfert de force et épousement de forme, caractérisé en ce que la plaque de support (22) présente dans une position de prémontage, de part et d'autre d'un plan médian transversal vertical (26), au niveau de sa face inférieure (25), une inclinaison à angle aigu (27, 28) et est fixée par une déformation de sa partie située entre les mâchoires de serrage (20, 21) dans la position de montage appliquée à une surface d'appui (29) de l'essieu (4).

2. Dispositif suivant la revendication 1, caractérisé en ce que le corps de serrage (14) est chevauché dans sa position de prémontage par deux brides de ressort en U (6, 7) et celles-ci sont mises sous tension dans la position de montage.

3. Dispositif suivant la revendication 1 ou 2, caractérisé en ce que les mâchoires de serrage (20, 21) appliquées contre les régions superficielles extérieures (17, 18) de l'essieu (4) présentent chacune, dans la position de prémontage, des régions d'appui linéaires (23, 24) et dans la position de montage, une région d'appui plane continue (23', 24').

4. Dispositif suivant l'une quelconque des revendications 1 à 3, caractérisé en ce que les deux mâchoires de serrage (20, 21) sont chacune soudées à la plaque de support (22).

5. Dispositif suivant l'une quelconque des revendications 1 à 3, caractérisé en ce que le corps de serrage (14) est conçu comme une pièce d'un seul tenant.

6. Dispositif suivant la revendication 5, caractérisé en ce que le corps de serrage (14) est conçu comme une pièce en acier moulé.

7. Dispositif suivant la revendication 5, caractérisé en ce que le corps de serrage (14) est conçu comme une pièce forgée.

8. Dispositif suivant l'une quelconque des revendications 1 à 7, caractérisé en ce que les mâchoires de serrage (20, 21) qui se trouvent sur les régions inférieures inclinées respectives (31, 32) de la plaque de support (22) offrent, dans la position de prémontage, une surface d'ancrage de pression (33, 34) convexe au moins localement à l'égard des régions superficielles extérieures (17, 18).

9. Dispositif suivant l'une quelconque des revendications 1 à 8, caractérisé en ce que les mâchoires de serrage (20, 21) sont conçues respectivement comme des pièces disposées, dans la position de montage, coaxialement au plan médian (30) des éléments de bras (2, 3) et présentant des passages traversants symétriques (37, 38) pour les brides de ressort (6, 7).

10. Dispositif suivant la revendication 9, caractérisé en ce que chaque mâchoire de serrage (20, 21) présente entre les passages traversants (37, 38) une région d'appui médiane (40) qui est en retrait par rapport aux surfaces d'appui extérieures correspondantes (41, 42).

11. Dispositif suivant la revendication 9 ou 10, caractérisé en ce que les surfaces d'appui extérieures (41, 42) présentent chacune un chanfrein (43, 44) s'élevant vers les passages (37, 38).

12. Dispositif suivant la revendication 11, caractérisé en ce que les régions d'appui linéaires (23, 24) sont formées au-dessus du chanfrein respectif (43, 44) des surfaces d'appui (41, 42) dans la position de prémontage des mâchoires de serrage (20, 21).

13. Dispositif suivant l'une quelconque des revendications 10 à 12, caractérisé en ce que les surfaces d'appui extérieures (41, 42) présentent, dans la position de prémontage, une inclinaison (45) correspondant aux angles (27, 28) dans la région de la plaque de support (22).

14. Dispositif suivant l'une quelconque des revendications 10 à 13, caractérisé en ce que les surfaces d'appui extérieures (41, 42) se fondent aux bords en un arrondi façonné (46).

15. Dispositif suivant l'une quelconque des revendications 1 à 14, caractérisé en ce que les mâchoires de serrage (20, 21) sont conçues chacune comme une pièce façonnée présentant, dans la région d'épaisseur de paroi sensiblement constante (47), une hauteur de pièce (H) constante.

16. Dispositif suivant l'une quelconque des revendications 1 à 15, caractérisé en ce que les mâchoires de serrage (20, 21) sont pourvues de passages traversants en forme d'évidements (37, 38), pour chaque branche de serrage (8, 9; 10, 11) des brides de ressort (6, 7), qui s'étendent sur la hauteur de pièce (H).

17. Dispositif suivant la revendication 16, caractérisé en ce que les évidements (37, 38) présentent chacun une région de paroi de fond de forme courbe (49), qui se fond en des régions de paroi (50, 51) allant en s'élargissant vers l'extérieur.

18. Dispositif suivant l'une quelconque des revendications 15 à 17, caractérisé en ce que les régions de la pièce façonnée dirigées vers l'extérieur dans la position de montage des mâchoires de serrage (20, 21) présentent des contours arrondis (52, 53) qui se raccordent sans ressauts.

19. Dispositif suivant l'une quelconque des revendications 10 à 18, caractérisé en ce que la mâchoire de serrage (20, 21) présente, à chacune de ses extrémités dans la région des surfaces d'appui (41, 42), une partie oblique façonnée (54, 55) qui s'étend depuis la hauteur de pièce (H) jusqu'à la région d'extrémité.

20. Dispositif suivant l'une quelconque des revendications 1 à 19, caractérisé en ce que le corps de serrage (14) comprend, sur une surface d'appui (56), opposée aux mâchoires de serrage (20, 21), pour l'élément de bras (3), des guides (15, 16) traversés par les brides de ressort (6, 7).

21. Dispositif suivant l'une quelconque des revendications 1 à 20, caractérisé en ce que le corps de serrage (14) comprend, dans la région de la plaque de support (22), un alésage (58) qui reçoit un boulon central (57) d'assemblage des éléments de bras.
